# EUROPÄISCHE PATENTSCHRIFT

(11) **EP 1 615 374 B1**
(45) Veröffentlichungstag und Bekanntmachung des Hinweises auf die Patenterteilung: **05.09.2007**
(21) Anmeldenummer: 04016137.4
(22) Anmeldetag: 08.07.2004
(51) Int. Cl.: H04L 12/18

(54) **Verfahren zum Senden und Empfangen von Ereignismeldungen**
Method for transmitting and receiving event notifications
Procédé d'émission et de réception des notifications d'événement

(43) Veröffentlichungstag der Anmeldung: 11.01.2006
(73) Patentinhaber: SIEMENS AKTIENGESELLSCHAFT, 80333 München (DE)
(72) Erfinder: Becker, Peter, 76571 Gaggenau (DE)

(56) Entgegenhaltungen:
- US-A- 5 297 143
- LIU Y J ET AL: "On selected directed broadcast of MIL-STD-2045-14502-1A" MILITARY COMMUNICATIONS CONFERENCE, 1996. MILCOM '96, CONFERENCE PROCEEDINGS, IEEE MCLEAN, VA, USA 21-24 OCT. 1996, NEW YORK, NY, USA,IEEE, US, 21. Oktober 1996 (1996-10-21), Seiten 421-425, XP010203888 ISBN: 0-7803-3682-8
- "TIMERS FOR RELIABLE LINEAR MULTICAST" IBM TECHNICAL DISCLOSURE BULLETIN, IBM CORP. NEW YORK, US, Bd. 35, Nr. 7, 1. Dezember 1992 (1992-12-01), Seiten 124-130, XP000332912 ISSN: 0018-8689

## Beschreibung

Die Erfindung betrifft ein Verfahren zum Senden und Empfangen von Ereignismeldungen, insbesondere ein Verfahren zum gesicherten Senden und Empfangen solcher Meldungen.

Automatisierungsgeräte, wie z. B. speicherprogrammierbare Steuerungen (SPS), umfassen eine Funktionalität zum Melden von Ereignissen, z. B. mittels programmierter Meldebausteine. Eine solche Meldung über ein Ereignis erfolgt mittels einer Ereignismeldung, die an einen und/oder mehrere Kommunikationsteilnehmer gesendet wird, die zum Empfang und zur Verarbeitung einer solchen Ereignismeldung vorgesehen sind. Bei einem solchen zum Empfang einer Ereignismeldung vorgesehenen Kommunikationsteilnehmer handelt es sich z. B. um ein Meldegerät oder dergleichen, z. B. ein sog. "Operation System" oder ein "Operation Panel". Im Folgenden wird ein Meldegerät als Beispiel für eine zum Empfang von Ereignismeldungen vorgesehene Einheit allgemein als entfernter Kommunikationsteilnehmer bezeichnet. An diesen entfernten Kommunikationsteilnehmer wird die Ereignismeldung versandt. Der Versand geht z. B. von einem Steuerungsteil des Automatisierungsgerätes aus. Die zum Versenden von Ereignismeldungen vorgesehene Einheit wird im Folgenden zur Unterscheidung von dem oder jedem entfernten Kommunikationsteilnehmer kurz einfach als Kommunikationsteilnehmer bezeichnet.

Das Versenden von Ereignismeldungen innerhalb eines Automatisierungsgerätes, das auch als verteiltes Automatisierungsgerät oder als vernetztes Automatisierungssystem ausgeführt sein kann, ist bekannt. Wichtig ist, dass bei einem Versand einer Ereignismeldung an mehrere entfernte Kommunikationsteilnehmer alle Empfänger der Ereignismeldung die gleiche Ereignissituation anzeigen. Dies wird dadurch erreicht, dass der die Ereignismeldung versendende Kommunikationsteilnehmer zu jedem zum Empfang der Ereignismeldung vorgesehenen entfernten Kommunikationsteilnehmer jeweils eine Kommunikationsverbindung in der siebenten Ebene des insgesamt sieben Ebenen umfassenden bekannten ISO-Kommunikationsstacks herstellt. Zu einem Ereignis als Ursache für die zu versendende Ereignismeldung gehört also eine Vielzahl einzelner Kommunikationsverbindungen, wobei sich die Anzahl der benötigten Kommunikationsverbindungen aus der Anzahl der zum Empfang der Ereignismeldung vorgesehenen entfernten Kommunikationsteilnehmer ergibt. Daraus resultiert für den sendenden Kommunikationsteilnehmer eine hohe Belastung, die ggf. auch andere, parallel laufende Kommunikationsdienste beeinträchtigt. Bei einem hochverfügbaren System, bei dem einzelne oder sämtliche Systemeinheiten redundant, also zumindest doppelt ausgeführt sind, erhöht sich diese Belastung nochmals erheblich, und zwar insbesondere auch deshalb, weil die einzelnen Sendevorgänge miteinander synchronisiert werden müssen, was weitere Kommunikationsvorgänge erfordert.

Aus US 5,297,143 ist ein Verfahren zum Übermitteln von Meldungen von einem ersten Kommunikationsteilnehmer an mindestens einen weiteren Kommunikationsteilnehmer über eine Broad- oder Multicast-Verbindung bekannt, bei dem die Übermittlung einer Ereignismeldung nur dann als erfolgreich angesehen wird, wenn von sämtlichen Kommunikationsteilnehmern, an welche die Ereignismeldung übermittelt werden sollte, eine Quittung über den sicheren Erhalt der Ereignismeldung registriert wird. Hierbei wird die Ereignismeldung auf der Applikationsebene (siebte Ebene) generiert und an die Applikationsebene der Kommunikationsteilnehmer gesendet, in der die jeweiligen Quittungen generiert werden, deren vollständiger Erhalt auf der Transportebene (vierte Ebene) des Senders der Ereignismeldung überprüft wird.

Der Erfindung liegt daher die Aufgabe zugrunde, ein Kommunikationsverfahren anzugeben, mit dem die oben genannten Nachteile vermieden oder in ihrer Auswirkung reduziert werden.

Diese Aufgabe wird erfindungsgemäß mit den Merkmalen des Anspruchs 1 gelöst. Dazu ist bei einem Verfahren zum Übermitteln einer Meldung über ein von einem ersten Kommunikationsteilnehmer registriertes Ereignis - Ereignismeldung - an mindestens einen entfernten Kommunikationsteilnehmer vorgesehen, dass die Ereignismeldung in Form eines Broad- oder Multicast-Telegramms versandt wird.

Die Erfindung geht dabei von der Erkenntnis aus, dass die an sich bekannten Broad- oder Multicast-Telegramme nur einmalig versandt werden und von jedem angeschlossenen Kommunikationsteilnehmer oder einer Gruppe von Kommunikationsteilnehmern empfangen werden. Durch die Versendung von Ereignismeldungen als Broad- oder Multicast-Telegramm wird also die gewünschte Entlastung bei der Kommunikation erreicht, weil unabhängig von der Anzahl der entfernten Kommunikationsteilnehmer, an die ein Ereignis zu melden ist, stets nur ein Telegramm versandt wird. Bisher ist - vor allem aufgrund der Gefahr des Telegrammverlusts - die Verwendung von Broad- oder Multicast-Telegrammen zur Meldung von Ereignissen nicht in Betracht gezogen worden.

Darüber hinaus ist erfindungsgemäß vorgesehen, dass die Ereignismeldung in Form eines Broad- oder Multicast-Telegramms das zumindest die Ereignismeldung umfasst, aus einer zweiten Ebene eines sieben Ebenen umfassenden Kommunikationsstacks versandt wird, so dass der Versand unabhängig von einer der siebenten Ebene zugehörigen Meldeapplikation, welche die Information über das Ereignis von einem Meldebaustein erhält, erfolgen kann. Bevorzugt erfolgt der Versand aus der zweiten Ebene, beispielsweise in einem priorisierten Betriebssystem im Kontext einer sog. Interrupt-Service-Routine (ISR) oder einer sehr hochprioren Task, so dass sich schnelle Reaktionszeiten beim Versenden der Ereignismeldungen ergeben.

Des Weiteren ist erfindungsgemäß vorgesehen, dass eine dem ersten Kommunikationsteilnehmer zugeordnete Meldeliste, in die jeder entfernte Kommunikationsteilnehmer zum Empfang einer. Ereignismeldung eingetragen wird, Informationen über eine Anzahl von Quittungen, die als Reaktion auf den Versand der jeweiligen Ereignismeldung von dem oder jedem entfernten Kommunikationsteilnehmer erwartet werden, umfasst. Dadurch lässt sich einerseits das Senden der Ereignismeldung an den oder jeden dafür vorgesehenen entfernten Kommunikationsteilnehmer sicherstellen. Andererseits erhält der sendende, erste Kommunikationsteilnehmer Informationen darüber, ob die Ereignismeldung jeden vorgesehenen entfernten Kommunikationsteilnehmer ggf. innerhalb einer bestimmten, vorgegebenen oder vorgebbaren Zeitspanne erreicht hat. Es lässt sich also feststellen, ob die Ereignismeldung jeden vorgesehenen entfernten Kommunikationsteilnehmer erreicht hat. Wenn sämtliche erwarteten Quittungen eingetroffen sind, wird aus der zweiten Ebene das Ende des Meldevorgangs signalisiert.

Der Vorteil der Erfindung besteht darin, dass die gewünschte Verringerung der Kommunikationslast ohne Einbußen bei der Zuverlässigkeit der Kommunikation erreicht wird.

Vorteilhafte Ausgestaltungen der Erfindung sind Gegenstand der Unteransprüche.

Bevorzugt wird als Reaktion auf die Ereignismeldung von dem oder jedem Empfänger der Ereignismeldung eine zugehörige Quittung ebenfalls in Form eines Broad- oder Multicast-Telegramms versandt, so dass die Vorteile, die sich beim Versenden der Ereignismeldung ergeben, auch beim Versenden der Quittung ausgenutzt werden.

Weiter bevorzugt wird die Quittung in Form eines Broad- oder Multicast-Telegramms auch auf Seiten des Empfängers der Ereignismeldung, also auf Seiten des jeweiligen entfernten Kommunikationsteilnehmers, aus einer zweiten Ebene eines sieben Ebenen umfassenden Kommunikationsstacks versandt. Hier ergeben sich entsprechende Vorteile wie beim Versenden der Ereignismeldung aus der zweiten Ebene.

Wenn eine dem ersten Kommunikationsteilnehmer zugeordnete Meldeliste, in die jeder entfernte Kommunikationsteilnehmer zum Empfang einer Ereignismeldung eingetragen wird, Informationen über eine Anzahl von als Reaktion auf den Versand der jeweiligen Ereignismeldung erwarteten Quittungen von dem oder jedem entfernten Kommunikationsteilnehmer umfasst, ist es möglich, genau festzustellen, welchen entfernten Kommunikationsteilnehmer die Ereignismeldung erreicht hat. Denn nur solche entfernte Kommunikationsteilnehmer, bei denen die Ereignismeldung eingetroffen ist, senden die Quittung zurück. Es ist anhand der Meldeliste feststellbar, ob die Ereignismeldung sämtliche vorgesehenen entfernten Kommunikationsteilnehmer erreicht hat. Ist dies der Fall, ist der Meldevorgang insgesamt erfolgreich abgeschlossen.

Der Versand der Ereignismeldung wird dann und nur dann durch den ersten Kommunikationsteilnehmer als erfolgreich quittiert, z. B. mittels einer Quittung an den Meldebaustein, wenn sämtliche aufgrund der Informationen der Meldeliste erwarteten Quittungen eingetroffen sind.

Anhand der Meldeliste ist aber bei einem nicht erfolgreichen Abschluss des Meldevorgangs auch erkennbar, welchen entfernten Teilnehmer die Ereignismeldung nicht erreicht hat. In Bezug auf diesen entfernten Kommunikationsteilnehmer können Sondermaßnahmen, z. B. eine Wiederholung der Sendung, eingeleitet werden.

Die Überwachung der im Rahmen der Meldung des Ereignisses versandten Telegramme lässt sich noch weiter verbessern, wenn mit dem Versenden der Ereignismeldung eine Zeitüberwachung gestartet wird und der erste Kommunikationsteilnehmer den Versand der Ereignismeldung dann und nur dann als erfolgreich quittiert, wenn sämtliche aufgrund der Informationen der Meldeliste erwarteten Quittungen innerhalb einer durch die Zeitüberwachung vorgegebenen Zeitspanne eingetroffen sind. Dann lassen sich auch Situationen erfassen, bei denen der Versand eines Telegramms ungewöhnlich lange dauert oder bei denen ein adressierter entfernter Kommunikationsteilnehmer eine Funktionsstörung aufweist, die den Empfang der Ereignismeldung und/oder deren Quittierung verhindert. Der erste Kommunikationsteilnehmer "wartet" aufgrund der Zeitüberwachung maximal die durch die Zeitüberwachung vorgegebene Zeitspanne auf das Eintreffen der erwarteten Quittungen. Ohne eine solche Zeitüberwachung könnte sich eine untragbar lange Wartezeit ergeben, die eine Meldung über weitere Ereignisse verhindert.

Eine einfache und effiziente Möglichkeit zur Überprüfung der eingehenden Quittungen und zur Entscheidung darüber, ob sämtliche erwarteten Quittungen eingetroffen sind, besteht darin, dass der erste Kommunikationsteilnehmer beim Versenden der Ereignismeldung einen der Meldeliste zugeordneten Meldequittierzähler mit der Anzahl der in der Meldeliste zum Empfang der Ereignismeldung eingetragenen entfernten Kommunikationsteilnehmer initialisiert.

Beim Empfang einer Quittung von einem entfernten Kommunikationsteilnehmer, der nach dem Inhalt der Meldeliste für einen Empfang der Ereignismeldung vorgesehen war, dekrementiert der erste Kommunikationsteilnehmer den Meldequittierzähler. Wenn also jeder zum Empfang der Ereignismeldung vorgesehene entfernte Kommunikationsteilnehmer genau eine Quittung sendet, hat der Meldequittierzähler nach dem Empfang der letzten Quittung wieder den Wert vor dem Versand der Ereignismeldung, z. B. Null. Zur weiteren Absicherung des Verfahrens ist vorteilhaft vorgesehen, dass nur der Eingang solcher Quittungen zu einer Veränderung des Meldequittierzählers führt, die von entfernten Kommunikationsteilnehmern stammen, an die die jeweilige Ereignismeldung tatsächlich versandt wurde. Zu diesem Zweck werden Kennzeichnungen sowohl in dem Telegramm mit der Ereignismeldung als auch in dem Telegramm mit der Quittung ausgetauscht, die die beteiligten Kommunikationsteilnehmer eindeutig referenzieren, so dass eine solche Zuordnung möglich ist.

Eine nochmalige Verbesserung des Verfahrens ergibt sich, wenn die Meldeliste für jeden zum Empfang der Ereignismeldung angemeldeten entfernten Kommunikationsteilnehmer einen Meldequittiermerker umfasst und der Empfang einer Quittung von einem entfernten Kommunikationsteilnehmer im jeweils zugehörigen Meldequittiermerker gespeichert wird. Der Meldequittierzähler wird in Abhängigkeit vom Meldequittiermerker dann und nur dann dekrementiert, wenn in dem zugehörigen Meldequittiermerker nicht bereits zuvor ein Empfang einer vorangehenden Quittung gespeichert wurde. Auf diese Weise wird verhindert, dass eventuelle von ein und demselben entfernten Kommunikationsteilnehmer mehrfach eintreffende Quittungen das Verfahren beeinträchtigen und dass bei einer Mehrzahl solcher Quittungen jede dieser Quittungen als erwartete Quittung ausgewertet wird, so dass fehlerhaft zu früh der vermeintlich ordnungsgemäße Abschluss des Verfahrens zur Meldung des jeweils zugrunde liegenden Ereignisses festgestellt würde.

Auf Seiten des oder jedes entfernten Kommunikationsteilnehmers ist vorteilhaft eine dem oder jedem entfernten Kommunikationsteilnehmer zugeordnete Empfangs-Meldeliste zur Aufnahme eines mit der Ereignismeldung empfangenen Meldungszählers vorgesehen, wobei der Wert des Meldungszählers der empfangenen Ereignismeldung und der in der Empfangs-Meldeliste vorhandene Wert des Meldungszählers vor Verarbeitung der Ereignismeldung verglichen wird. Auf diese Weise besteht eine effiziente Möglichkeit, um ein empfangenes Telegramm mit einer Ereignismeldung bereits vor der eigentlichen Verarbeitung auszuwerten.

Dabei ist z. B. vorgesehen, dass die empfangene Ereignismeldung durch den entfernten Kommunikationsteilnehmer dann nicht verarbeitet wird, wenn der empfangene und der gespeicherte Meldungszähler übereinstimmen. In einem solchen Fall handelt es sich nämlich bei der mit dem empfangenden Telegramm eingegangenen Ereignismeldung um eine bereits empfangene (und verarbeitete) Ereignismeldung, deren erneute Verarbeitung auf Seiten des entfernten Kommunikationsteilnehmers selbstverständlich nicht mehr erforderlich ist. Es kann allerdings vorgesehen sein, dass auch der Empfang einer solchen bereits zuvor empfangenen Ereignismeldung erneut mit dem Versenden einer Quittung quittiert wird. Damit wird der Fall abgedeckt, dass z. B. die Quittung vom ursprünglichen Sender der Ereignismeldung, also z. B. dem ersten Kommunikationsteilnehmer, nicht empfangen wurde und deshalb durch den ersten Kommunikationsteilnehmer der Meldevorgang wiederholt wurde.

Des Weiteren ist vorgesehen, dass die empfangene Ereignismeldung vom entfernten Kommunikationsteilnehmer akzeptiert und insbesondere an eine dem jeweiligen Kommunikationsteilnehmer zugeordnete Anzeigeapplikation weitergeleitet wird, wenn
- der in der Empfangs-Meldeliste gespeicherte Meldungszähler gleich Null ist oder
- der in der Empfangs-Meldeliste gespeicherte und um Eins inkrementierte Meldungszähler identisch mit dem empfangenen Meldungszähler ist oder
- der in der Empfangs-Meldeliste gespeicherte und um Eins inkrementierte Meldungszähler kleiner als der empfangene Meldungszähler ist.

Im ersten Fall (gespeicherter Meldungszähler ist gleich "Null") handelt es sich bei der empfangenen Ereignismeldung um die erste Ereignismeldung, nachdem sich der jeweilige entfernte Kommunikationsteilnehmer zum Empfang von Ereignismeldungen hinsichtlich dieses Ereignisses angemeldet hat. Eine solche Ereignismeldung wird selbstverständlich akzeptiert und durch den entfernten Kommunikationsteilnehmer weiter verarbeitet, z. B. durch Weiterleitung an eine Anzeigeapplikation, die das empfangene Ereignis in einer geeigneten Form zur Anzeige bringt.

Im zweiten Fall (der inkrementierte gespeicherte Meldungszähler ist gleich dem empfangenen Meldungszähler oder der empfangene Meldungszähler ist um genau "1" größer als der gespeicherte Meldungszähler) handelt es sich um einen Empfang einer Ereignismeldung bei "normalem" Ablauf des Meldeverfahrens. Die empfangene Meldung wird akzeptiert und verarbeitet.

Im dritten Fall (der inkrementierte gespeicherte Meldungszähler ist kleiner als der empfangene Meldungszähler) ist eine zuvor gesendete Ereignismeldung verloren gegangen. Die aktuell empfangene Ereignismeldung wird akzeptiert und verarbeitet. Hinsichtlich der verloren gegangenen Ereignismeldung ist auf Seiten des entfernten Kommunikationsteilnehmers keine weitere Maßnahme erforderlich, da der Sender der Ereignismeldung den Verlust der Meldung bereits festgestellt hat und eigene Maßnahmen zur Gewährleistung einer gleichen Meldesicht bei allen angesprochenen Meldegeräten, also den adressierten entfernten Kommunikationsteilnehmern, eingeleitet hat. Gleiche Meldesicht meint dabei eine bei allen Meldegeräten vorliegende gleiche Anzahl von Ereignismeldungen. Hinsichtlich der vom Sender einer verloren gegangenen Ereignismeldung eingeleiteten Maßnahmen ist insbesondere eine übliche Update-Anforderung zu nennen.

Zur weiteren Absicherung des erfindungsgemäßen Verfahrens ist vorteilhaft vorgesehen, dass der empfangene Meldungszähler in der Empfangs-Meldeliste des jeweiligen entfernten Kommunikationsteilnehmers dann gespeichert wird, wenn dieser die empfangene Ereignismeldung akzeptiert hat. Mit der Übernahme des Wertes des empfangenen Meldungszählers kann der beim Empfang der nächsten Ereignismeldung empfangene Meldungszähler nach dem oben beschriebenen Verfahren ausgewertet werden. Durch die Übernahme des Wertes des empfangenen Meldungszählers ist im Zusammenhang mit der oben beschriebenen Auswertung des empfangenen und gespeicherten Meldungszählers weiterhin sichergestellt, dass ein und dieselbe Ereignismeldung durch einen entfernten Kommunikationsteilnehmer nur einmal verarbeitet wird.

Um die Menge der im Rahmen der Ereignismeldung zwischen den beteiligten Kommunikationsteilnehmern auszutauschenden Telegramme auf ein Minimum zu reduzieren, ist vorgesehen, dass der oder jeder entfernte Kommunikationsteilnehmer eine Quittung als Reaktion auf eine empfangene Ereignismeldung dann sendet, wenn dieser die Ereignismeldung anhand der Auswertung von empfangenem und gespeichertem Meldungszähler akzeptiert hat.

Zur Anwendung des erfindungsgemäßen Verfahrens bei einem hochverfügbaren System mit einem zumindest doppelt ausgeführten ersten Kommunikationsteilnehmer und/oder zumindest einem ebenfalls zumindest doppelt ausgeführten entfernten Kommunikationsteilnehmer umfasst die Meldeliste für jeden angemeldeten entfernten Kommunikationsteilnehmer zusätzlich Informationen im Hinblick auf das redundante Gegenstück des jeweiligen Kommunikationsteilnehmers.

Auch bei hochverfügbaren Systemen wird der Versand der Ereignismeldung dann und nur dann als erfolgreich quittiert, wenn sämtliche aufgrund der Informationen der Meldeliste erwarteten Quittungen von sämtlichen entfernten Kommunikationsteilnehmern eingetroffen sind.

Der Vorteil der Erfindung und ihrer Ausgestaltungen besteht damit insbesondere darin, dass bei Verringerung der Kommunikationslast die Übertragung der Telegramme abgesichert ist, dass auf Seiten des sendenden, ersten Kommunikationsteilnehmers erkennbar ist, ob die Ereignismeldung alle vorgesehenen entfernten Kommunikationsteilnehmer erreicht hat. Bei fehlenden Telegrammen ist eine Telegrammwiederholung möglich.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:
- FIG 1: den prinzipiellen Ablauf eines Meldevorgangs, wie er im Stand der Technik bekannt ist,
- FIG 2: ein im Stand der Technik bekanntes Verfahren zur Anmeldung zum Empfang von Meldungen über ein Ereignis,
- FIG 3: eine bei einer solchen Anmeldung verwendete Meldeliste vor und nach der Anmeldung,
- FIG 4: ein im Stand der Technik bekanntes Verfahren zur Übermittlung eines Telegramms mit einer Meldung über ein Ereignis,
- FIG 5: eine Prinzipdarstellung des erfindungsgemäßen Verfahrens,
- FIG 6: ein erfindungsgemäß angepasstes Verfahren zur Anmeldung zum Empfang von Meldungen über ein Ereignis,
- FIG 7: bei einer solchen Anmeldung verwendete Daten, nämlich eine Meldeliste und eine Empfangs-Meldeliste vor und nach der Anmeldung sowie ein Anmeldeauftrag und eine Anmeldequittung,
- FIG 8: eine Übermittlung eines Telegramms mit einer Meldung über ein Ereignis gemäß der Erfindung,
- FIG 9: dabei verwendete Daten, nämlich ein Meldetelegramm und ein Quittungstelegramm,
- FIG 10: eine Quittierung eines empfangenen Telegramms durch den oder jeden Empfänger gemäß der Erfindung,
- FIG 11: eine Anpassung der Meldeliste und der Empfangs-Meldeliste zur Verwendung bei einer Kommunikation zwischen hochverfügbaren Systemen und
- FIG 12: eine Prinzipdarstellung einer Ausgestaltung des erfindungsgemäßen Verfahrens zur Meldung eines Ereignisses und dessen Quittierung in einem hochverfügbaren System.

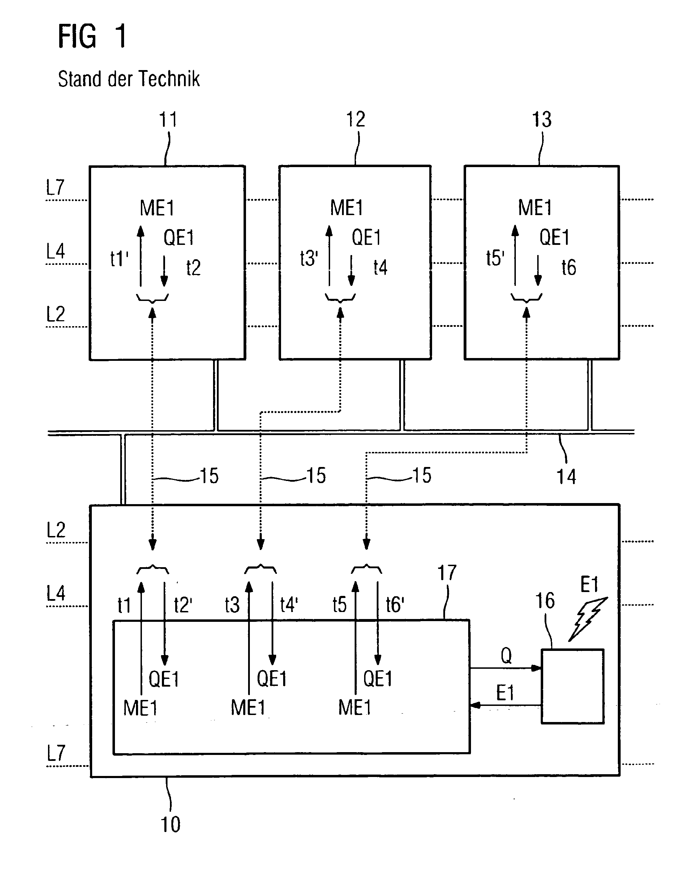

FIG 1 zeigt in einer schematisch vereinfachten Darstellung den prinzipiellen Ablauf eines Meldevorgangs, wie er im Stand der Technik bekannt ist.

Dargestellt sind als Kommunikationsteilnehmer eine speicherprogrammierbare Steuerung 10, im Folgenden kurz als SPS 10 bezeichnet, und eine Anzahl Meldegeräte 11, 12, 13, die im Folgenden zur Unterscheidung als erstes, zweites und drittes Meldegerät 11, 12, 13 oder kurz als MGA 11, MGB 12 und MGC 13 bezeichnet werden.

Mit L7, L4 und L2 sind die für den Meldevorgang relevanten Schichten des an sich bekannten ISO-Modells bezeichnet, wobei aus den insgesamt sieben Schichten des ISO-Schichtenmodells nur eine zweite Schicht L2, eine vierte Schicht L4 und eine siebente Schicht L7 dargestellt sind.

Zwischen den einzelnen Kommunikationsteilnehmern 10, 11-13 besteht z. B. eine Hardwareverbindung und/oder andere Verbindungen, wie z. B. eine Funkverbindung als Busverbindung 14. Über diese Busverbindung 14 wird sämtliche Kommunikation im Rahmen des Meldevorgangs abgewickelt. Dabei ergeben sich Kommunikationsverbindungen zwischen Protokollinstanzen, die jeweils einzelnen Schichten L2, L4, L7 des verwendeten Kommunikationsstacks zugeordnet sind. Dies ist aus Gründen der Übersichtlichkeit nicht im Detail dargestellt. Die Darstellung muss sich darauf beschränken, durch die Position einzelner Elemente in räumlicher Zuordnung zur jeweiligen Schicht L2, L4, L7 die tatsächliche Abwicklung von Kommunikationsvorgängen in dieser Schicht L2, L4, L7 oder mit einer Protokollinstanz dieser Schicht zu verdeutlichen.

Bei dem bekannten Meldevorgang erfolgt die Kommunikation mit Hilfe von Telegrammen, ausgehend von einer der obersten, siebten Schicht L7 zugeordneten Applikationsebene. In dieser Schicht L7 werden Meldungen erfasst und Meldetelegramme generiert. In der vierten Schicht L4 werden zu den einzelnen Kommunikationsteilnehmern 10, 11-13 jeweils ein oder mehrere Kommunikationsverbindungen, nämlich L4-Kommunikationsverbindungen 15 aufgebaut. Diese L4-Kommunikationsverbindungen 15 wachen direkt oder indirekt darüber, dass die zugehörigen Kommunikationspartner 10, 11; 10, 12; 10, 13, beispielsweise jeweils ein lokaler und ein entfernter Kommunikationsteilnehmer 11-13, kommunikationsfähig sind, und stellen sicher, dass ein versendetes Telegramm den Kommunikationsteilnehmer 10, 11-13, beispielsweise entfernten Kommunikationsteilnehmer, erreicht oder erreicht hat. Dazu gehören auch Wiederholstrategien, die bei temporären Störungen, die nicht zu einem Verbindungsabbruch führen, zum Einsatz kommen.

Um den Empfang eines Telegramms sicherzustellen, ist vorgesehen, dass auf ein gesendetes und beim Kommunikationsteilnehmer 11-13 eintreffendes Telegramm dieser eine Quittung generiert und an den sendenden Kommunikationsteilnehmer 10 zurücksendet. Dies geschieht innerhalb der vierten Schicht L4. Die Quittung wird entsprechend auch als L4-Quittung bezeichnet. Die L4-Quittung dient auch als Flusssteuerung, derart, dass eine weitere Meldung erst dann gesendet werden kann, wenn ein Telegramm durch den Kommunikationsteilnehmer 11-13 quittiert wurde.

Im Folgenden wird die Meldung eines Ereignisses E1 (in FIG 1 zusätzlich durch das "Blitz"-Symbol illustriert) an die Meldegeräte 11-13 erläutert. Das Ereignis E1 wird von einem Meldebaustein 16 erfasst und einer Meldeapplikation 17 signalisiert. Die oder jede Meldung über das Ereignis E1 ist mit ME1 bezeichnet.

Meldungen ME1, die quasi gleichzeitig an mehrere Meldegeräte 11, 12, 13 zu senden sind, werden mittels der in der SPS 10 ablaufenden Meldeapplikation 17 über die einzelnen L4-Kommunikationsverbindungen 15 seriell versendet. Dargestellt und mit t1, t1', t3, t3', t5, t5' bezeichnet sind die Zeiten, zu denen die Meldung ME1 versandt und beim einzelnen Meldegerät 11-13 empfangen wird. Für jede versendete Meldung ME1 wird eine L4-Quittung (mit QE1 bezeichnet) an die Meldeapplikation der siebenten Ebene L7 gesandt. Bezogen auf eine Realisierung in einer SPS-Firmware bedeutet dies heute für jede L4-Quittung QE1 ggf. mehrere Taskwechsel. Dargestellt und mit t2, t2', t4, t4', t6, t6' bezeichnet sind die Zeiten, zu denen die Quittung QE1 nach empfangener Meldung ME1 durch das jeweilige Meldegerät 11-13 generiert und versandt sowie durch die Meldeapplikation 17 empfangen wird.

Die dargestellten Meldegeräte 11-13 haben sich über die L4-Kommunikationsverbindungen 15 für das Melden von Ereignissen, wie z. B. des Ereignisses E1, angemeldet. Das Ereignis E1 wird durch den Meldebaustein 16 erfasst und an die Meldeapplikation 17 (Ebene L7) weitergeleitet. Dieses Ereignis E1 wird dann asynchron zum Meldebaustein 16 weiterverarbeitet. Es ist das Ziel, dieses Ereignis E1 an alle Meldegeräte 11-13, die sich für dieses Ereignis angemeldet haben, zu melden.

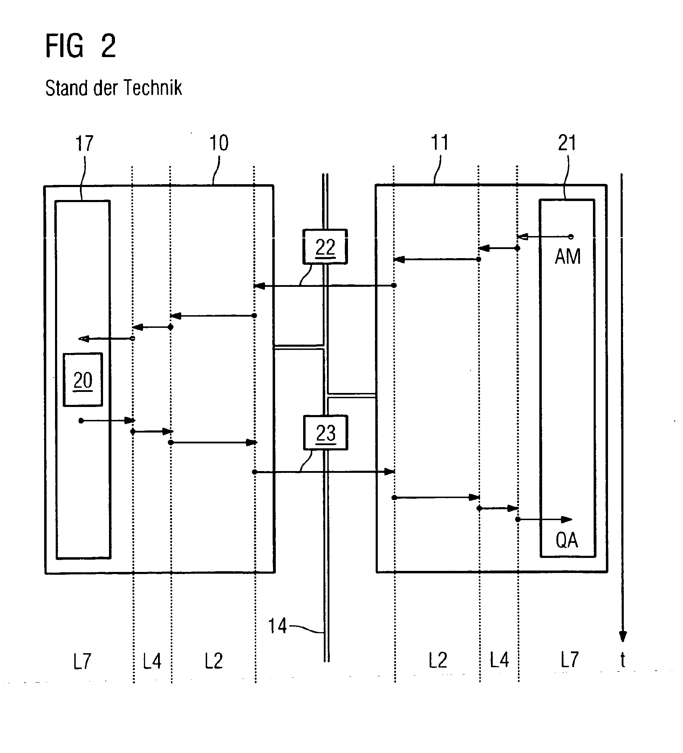

Bei den folgenden Betrachtungen anhand der Darstellung in FIG 2 sind nur die zweite, vierte und siebente Ebene L2, L4, L7 des Kommunikationsstacks relevant.

Zum Empfang von Meldungen über ein Ereignis E1 wird jedes Meldegerät 11-13 in eine Meldeliste 20 eingetragen. Dazu meldet sich das Meldegerät 11-13 durch seine Anzeigeapplikation 21 bei der Meldeapplikation 17 an, welche die Meldeliste 20 verwaltet. Dazu wird ein vom jeweiligen Meldegerät 11 ausgehender Anmeldeauftrag 22 und eine in Reaktion darauf von der SPS 10 an das jeweilige Meldegerät 11 gesandte Anmeldequittung 23 ausgetauscht. In FIG 2 ist mit AM die Aktion zur Anmeldung zum Empfang einer Meldung über ein Ereignis und mit QA der Empfang der Quittung zur vorgenannten Anmeldung bezeichnet.

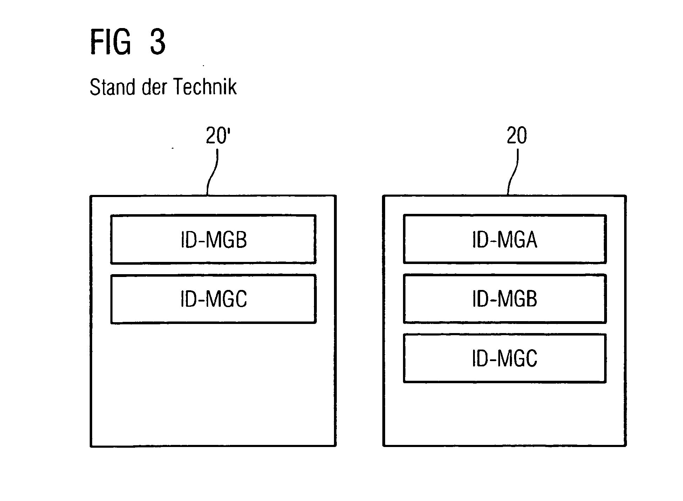

In FIG 3 ist dazu die Meldeliste 20 vor und nach dem Empfang des Anmeldeauftrags 22 von der Anzeigeapplikation 21 des ersten Meldegerätes MGA 11 gezeigt, wobei mit 20' die Meldeliste vor dem Empfang des Anmeldeauftrags 22 bezeichnet ist. Man erkennt, dass die Meldeliste 20' vor Empfang des neuen Anmeldeauftrags 22 bereits eine Anzahl von Einträgen enthält. Jeder Eintrag bezeichnet ein Meldegerät 11-13, das sich bereits zum Empfang von Meldungen über ein Ereignis und zur Anzeige des Ereignisses angemeldet hat. Im Beispiel sind bereits das zweite und dritte Meldegerät MGB, MGC 12, 13 angemeldet. In der Meldeliste 20' sind entsprechend Kennzeichnungen ("ID-MGB" und "ID-MGC") gespeichert, welche die angemeldeten Meldegeräte 11-13 eindeutig referenzieren. Nach Empfang des Anmeldeauftrags 22 vom ersten Meldegerät MGA 11 umfasst die (aktualisierte) Meldeliste 20 auch eine Kennzeichnung, die das erste Meldegerät MGA 11 referenziert ("ID-MGA"). Diese Kennzeichnung ("ID-MGA") wird im Rahmen des Anmeldeauftrags 22 übermittelt.

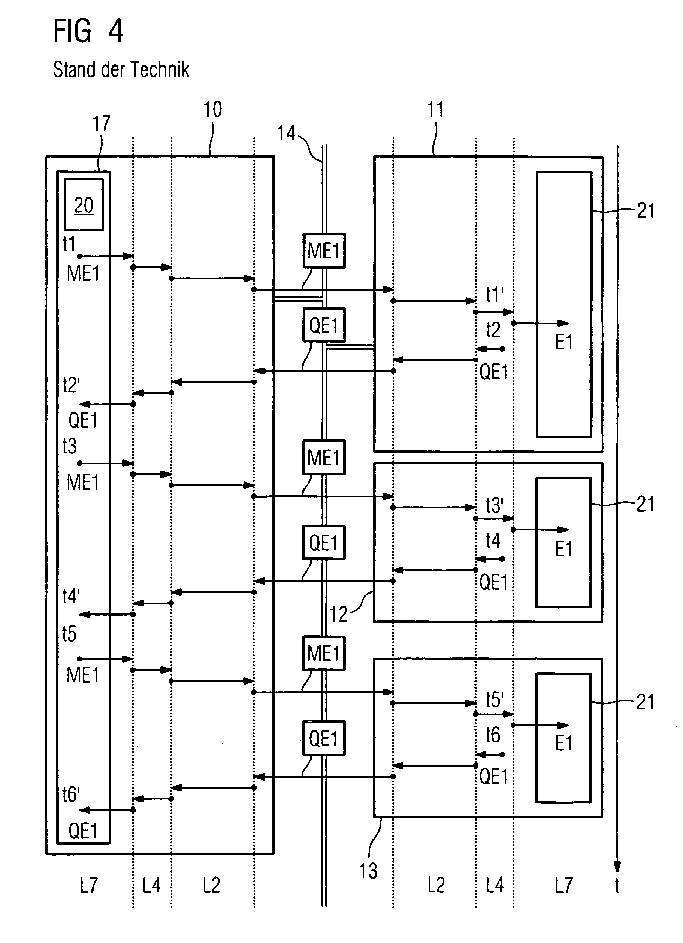

Im Falle eines zu meldenden Ereignisses E1 erfolgt die Meldung ME1 des Ereignisses E1 an die Anzeigeapplikation 21 derjenigen Meldegeräte 11-13, die zur Meldung des jeweiligen Ereignisses in die Meldeliste 20 eingetragen sind. Dies wird im Folgenden anhand von FIG 4 erläutert.

Die Meldeapplikation 17 beginnt anhand des Inhalts der Meldeliste 20 an die dort eingetragenen Kommunikationsteilnehmer, nämlich die angemeldeten Meldegeräte 11-13, zum Zeitpunkt t1 die Meldung ME1 über das Ereignis E1 zunächst an das erste Meldegerät MGA 11 über die vierte und zweite Ebene L4, L2 zu senden. Im ersten Meldegerät 11 wird die Meldung ME1 über das Ereignis E1 über die zweite Ebene L2 an die vierte Ebene L4 durchgereicht. Die vierte Ebene L4 des ersten Meldegeräts 11 quittiert zum Zeitpunkt t2 mit der L4-Quittung QE1 den Erhalt der Meldung ME1 und reicht die Meldung ME1 zur Anzeige an die Anzeigeapplikation 21 der siebenten Ebene L7 weiter. Nachdem die SPS 10 die L4-Quittung QE1 vom ersten Meldegerät 11 zum Zeitpunkt t2' erhalten hat, beginnt sie mit dem Melden des Ereignisses E1 an das zweite Meldegerät MGB 12 und, nachdem dieser Vorgang abgeschlossen ist, mit dem Melden des Ereignisses E1 an das dritte Meldegerät MGC 13.

Ist das Ereignis E1 zum Zeitpunkt t6' an alle Meldegeräte MGA, MGB, MGC 11-13 gesendet worden, wird eine Quittung Q an den Meldebaustein 16 gesandt (vgl. FIG 1). Dieser kann dann, sofern eine weitere Meldung anliegt, diese weitere Meldung senden. D. h., eine Meldung kann erst dann gemeldet werden, wenn der vorangegangene Meldevorgang (alle angemeldeten Meldegeräte 11-13 haben die Meldung in der vierten Ebene L4 erhalten) abgeschlossen ist. Die Zeit für den Meldevorgang bestimmt also in nachteiliger Weise die Meldesequenz. Aus dieser Belastung resultiert auch eine Belastung anderer Kommunikationsdienste, die quasi parallel bearbeitet werden.

Die Kommunikationslast durch das Versenden der Meldungen ME1 und das Empfangen der jeweils zugehörigen Quittungen QE1 wird in hochverfügbaren Steuerungen, also Steuerungen, in denen zwei speicherprogrammierbare Steuerungen 10 quasi parallel laufen, in nachteiliger Weise um Faktoren erhöht, da die einzelnen Sendevorgänge beim Senden und Empfangen der Meldungen ME1 und Quittungen QE1 zwischen den beteiligten Steuerungen mehrfach, zumindest zu den Zeitpunkten t1, t1', t2, ... t5', t6, t6', synchronisiert werden müssen.

Die vorstehend beschriebenen Nachteile des Standes der Technik versucht die Erfindung zu vermeiden.

Stand der Technik sind Multicast- oder Broadcast-Telegramme der zweiten Ebene L2 des sieben Ebenen umfassenden Kommunikationsstacks. Solche Telegramme werden einmalig versendet und gleichzeitig von Kommunikationsteilnehmern, die sich für den Empfang dieser Telegramme vorbereitet haben (Multicast), oder von allen Teilnehmern eines Netzes oder Teilnetzes (je nach Netzkonfiguration) empfangen (Broadcast).

Obwohl es grundsätzlich nahe liegend wäre, Meldungen per Broadcast oder Multicast zu versenden, ist dies bisher nicht in Betracht gezogen worden, weil eine solche Datenübertragung nicht überprüfbar und ausreichend sicher ist. Temporäre Störungen im Netz oder Ressourcenmangel (i. d. R. Speicher) des Empfängers können nämlich dazu führen, dass solche Telegramme nicht empfangen werden können. Des Weiteren fehlt beim Broad- oder Multicast auch die Wiederholstrategie der L4-Verbindungen.

Die gesicherte Übertragung von Telegrammen ist jedoch sehr wichtig, um unter anderem sicherzustellen, dass Ereignisse, wie z. B. eine gefährliche Situation, gemeldet werden.

Die Erfindung schlägt vor, eine Meldung nicht in der siebten Ebene L7 (Meldeapplikation 17) an die einzelnen angemeldeten Meldegeräte 11-13 zu senden, sondern dies per Multi- oder Broadcast aus der zweiten Ebene L2 heraus vorzunehmen. Die Meldeapplikation 17 wird erst nach Abschluss des Meldevorgangs an alle Meldegeräte 11-13 involviert.

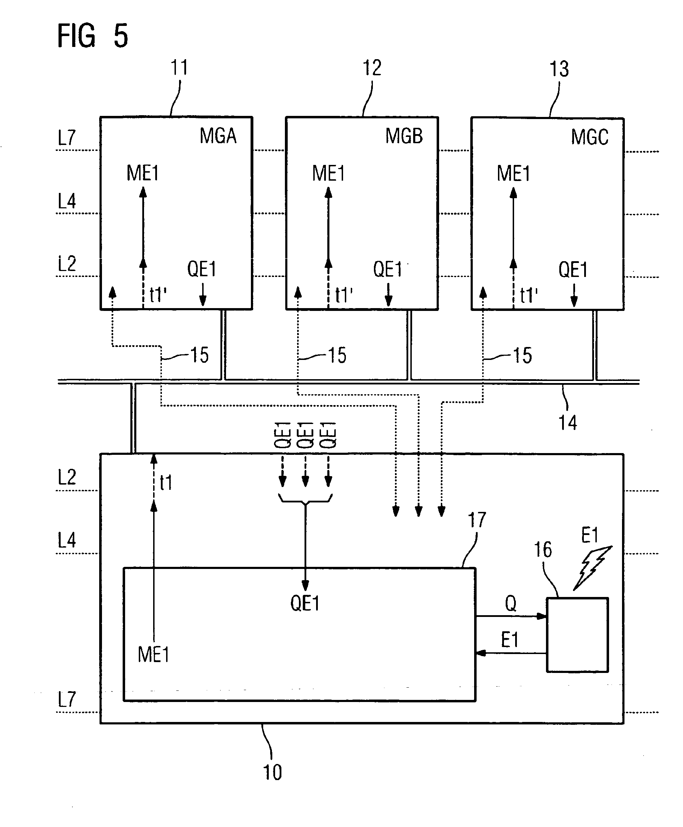

Dies wird im Folgenden skizzenartig anhand von FIG 5 und detailliert anhand der FIGen 6 bis 10 beschrieben.

FIG 5 zeigt, dass die Meldegeräte 11-13 als Empfänger der Meldung ME1 die Meldung ME1 im ersten Schritt in der zweiten Ebene L2 verarbeiten, indem der Empfang der Meldung ME1 per Multi- oder Broadcast der SPS 10 als Sender durch Senden einer Quittung QE1 quittiert wird. Der Empfang der Meldung ME1 erfolgt dabei aufgrund der Versendung des zugehörigen Telegramms als Broad- oder Multicast-Telegramm bei allen Meldegeräten 11-13 nahezu zeitgleich, nämlich zum Zeitpunkt t1'. Nach Absetzen der Quittung QE1 leitet jeder Empfänger der Meldung ME1 diese Meldung ME1 an die jeweilige Anzeigenapplikation 21 (in FIG 5 nicht dargestellt) der siebten Ebene L7 weiter, die das Ereignis E1 der Meldung ME1 zur Anzeige bringt.

Das Senden der Quittung QE1 durch den Empfänger und das Empfangen der Quittung QE1 durch den Sender erfolgt im Kontext einer Interrupt-Service-Routine (ISR) der zweiten Ebene L2 oder im Kontext einer sehr hochprioren Task. Dies ermöglicht sehr schnelle Reaktionszeiten beim Versenden und Empfangen der Quittungen.

Damit innerhalb dieser Verarbeitungseinheit sehr schnell reagiert werden kann, müssen sowohl im Sender, also z. B. der SPS 10, als auch im Empfänger, also z. B. den Meldegeräten 11-13, aufbereitete Anmeldeinformationen zur Verfügung stehen, und zwar zumindest im Hinblick auf
1. die Meldungen, z. B. die Meldung ME1 über das Ereignis E1, die für den jeweiligen Empfänger relevant sind, und
2. die Art und die Anzahl der Quittungen, die der Sender erwartet.

Aus der zweiten Ebene L2 wird als einmalig die Meldung ME1 zu dem Ereignis E1 per Broad- oder Multicast-Telegramm versandt. Jeder Empfänger der Meldung ME1, der sich nicht für dieses Ereignis E1 angemeldet hat, ignoriert dieses Telegramm. Angemeldete Empfänger, also die Meldegeräte 11-13, erhalten das Telegramm zeitgleich zum Zeitpunkt t1' in der zweiten Ebene L2 und senden, ebenfalls aus der zweiten Ebene L2, eine Quittung QE1 per Broad- oder Multicast oder ggf. gezielt an den Sender der Meldung.

Diese Quittung QE1 ist nur für die SPS 10 als Sender der Meldung ME1 interessant; andere Empfänger der Quittung QE1 ignorieren dieses Telegramm. Die SPS 10 "weiß" anhand der Meldeliste, von welchem Meldegerät 11-13 sie eine Quittung QE1 zu erwarten hat und "führt darüber Buch", welche Teilnehmer eine Quittung QE1 gesendet haben. Sind alle Quittungen QE1 eingetroffen oder ist eine vorgegebene Zeit abgelaufen (Time-out), wird dies der Meldeapplikation 17 gemeldet. Die Meldeapplikation 17 ihrerseits quittiert das Versenden der Meldungen ME1 in der im Zusammenhang mit FIG 1 beschriebenen Weise an den Meldebaustein 16.

Dies wird im Folgenden näher erläutert.

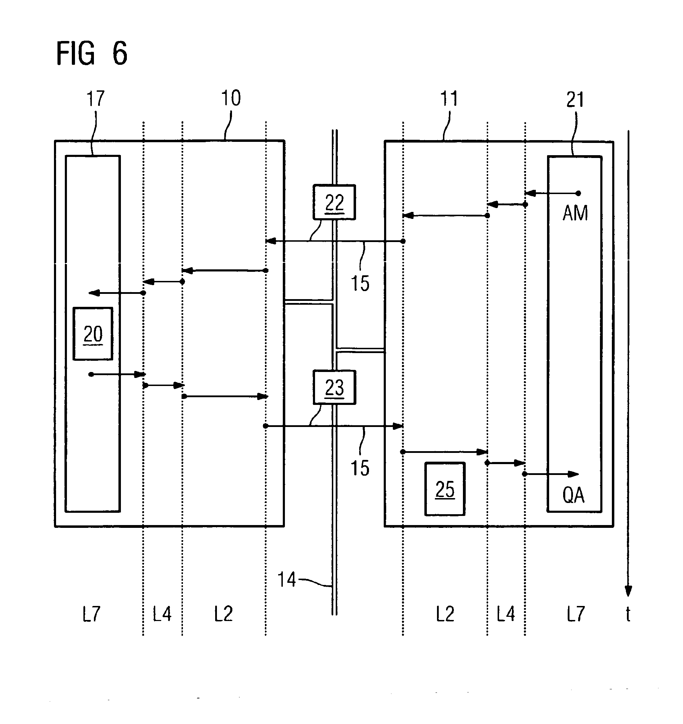

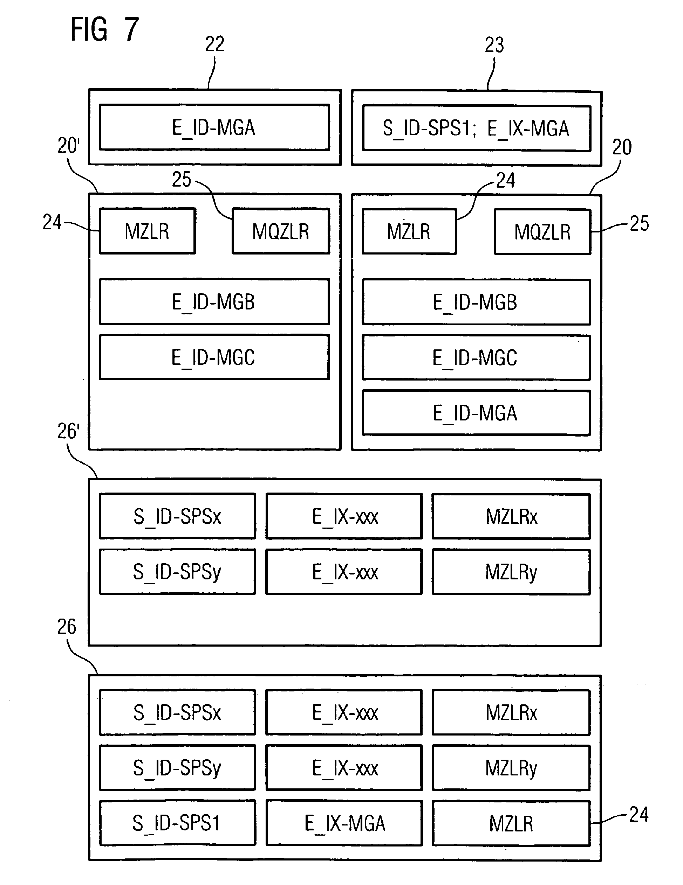

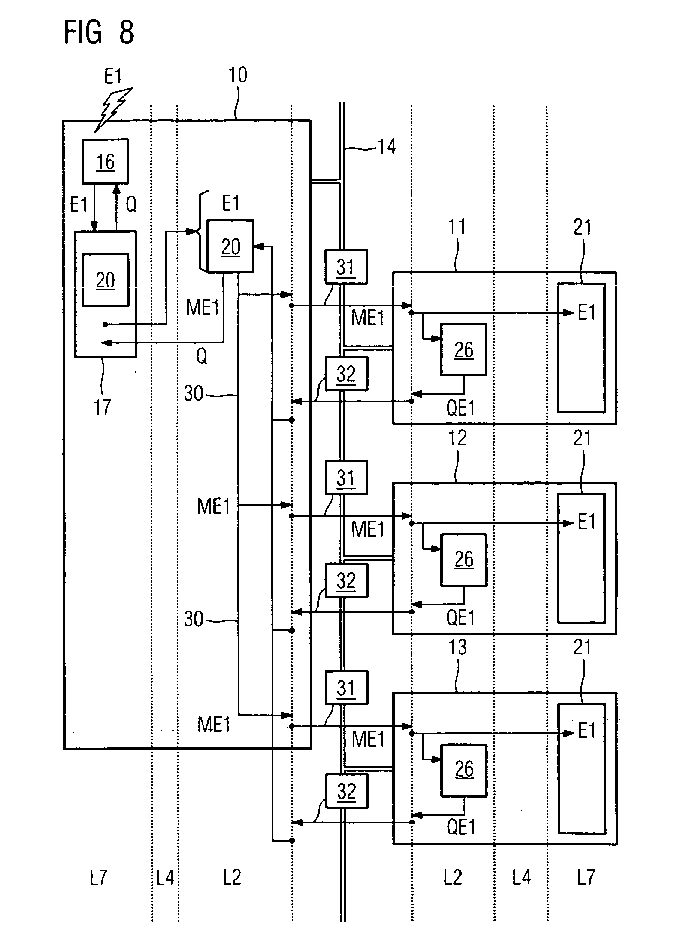

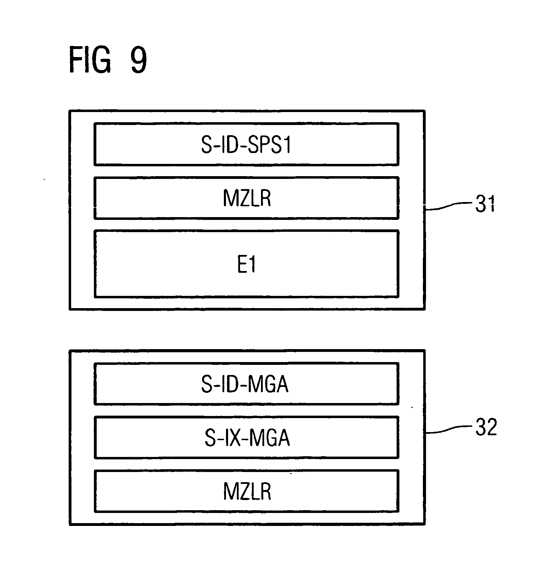

Die FIGen 6 bis 9 zeigen den detaillierten Ablauf des erfindungsgemäßen Meldeverfahrens. Beispielhaft dargestellt ist das Meldeverfahren zwischen einem ersten Meldegerät MGA 11 und einer ersten SPS SPS1 10 im Hinblick auf die Anmeldung zum Empfang von Meldungen ME1 (FIG 6, FIG 7) und das eigentliche Meldeverfahren (FIG 8, FIG 9). Weitere Meldegeräte 12, 13 sind abstrakt und reduziert auf die funktionale Bedeutung dargestellt.

Im Folgenden wird das Verfahren zur Anmeldung zum Empfang von Meldungen anhand von FIG 6 beschrieben, wobei einzelne Details aus Platzgründen nicht in FIG 6, sondern in einer separaten FIG 7 dargestellt sind.

Wenn sich das erste Meldegerät MGA 11 durch dessen Anzeigeapplikation 21 bei der Meldeapplikation 17 ersten SPS SPS1 10 für den Empfang von Meldungen ME1 im Zusammenhang mit einem bestimmten Ereignis, z. B. dem Ereignis E1, anmeldet AM, erfolgt dies mit dem bisherigen, bekannten Kommunikationsdienst über eine Kommunikationsverbindung. Dieser Dienst wird jedoch um zusätzlichen Informationsinhalt erweitert:

In einem Anmeldeauftrag 22, z. B. vom ersten Meldegerät 11 an die erste SPS SPS1 10, ist eine als Empfangskennzeichnung fungierende Empfangs-ID (z. B. E_ID-MGA; vgl. FIG 7) enthalten, die eindeutig im Netz 14 ist. Als Empfangs-ID kann z. B. eine MPI-Adresse oder eine TCP/IP-Adresse des sich anmeldenden Gerätes fungieren. Mittels einer solchen Empfangs-ID ist eine Quittung QE1, die auf das Senden einer Meldung ME1 folgt, dem Sender der Quittung QE1 (z. B. dem ersten Meldegerät 11) eindeutig zuordenbar.

Diese Information wird in einer insbesondere Meldeapplikation 17 der ersten SPS SPS1 10 zugeordneten Meldeliste 21 unter einem Meldeindex (z. B. E_IX-MGA; vgl. FIG 7) gespeichert. Die Meldeliste 21 umfasst zudem einen Meldungszähler 24 (z. B. MZLR; vgl. FIG 7), mit dem jede versendete Meldung ME1 "gestempelt" wird. Darüber hinaus umfasst die Meldeliste 21 auch noch einen Meldequittierzähler 25 (z. B. MQZLR; vgl. FIG 7).

In FIG 7 ist mit der Bezugsziffer 20' die Meldeliste vor dem Eingang des Anmeldeauftrags 22 bezeichnet. Nach dem Eingang des Anmeldeauftrags 22 umfasst die Meldeliste 20 zusätzlich auch die mit dem Anmeldeauftrag 22 übermittelte Empfangs-ID "E_ID-MGA". Die dargestellte Meldeliste 20 ist eine Meldeliste zum Senden von Meldungen im Zusammenhang mit dem Ereignis E1. Für weitere Ereignisse, z. B. E2, E3 usw., sind entsprechend weitere, nicht dargestellte Meldelisten vorgesehen. D. h., die Einheit, z. B. die SPS 10 oder die Meldeapplikation 17, der die Meldeliste 21 zugeordnet ist, verwaltet eine Meldebeziehung. Über diese Meldebeziehung werden alle Ergebnisse sequenziell gesendet, d. h., zu einem Zeitpunkt kann nur ein Ergebnis gemeldet werden.

Das Verfahren lässt jedoch mehrere Meldelisten zu, um z. B. Klassen von Meldungen zu bilden, die dann parallel bearbeitet werden können. Hierzu ist eine Erweiterung des Anmeldeauftrages sowie bei Meldungen um die Klassenbezeichnung notwendig (hier nicht dargestellt), wodurch eine Zuordnung der Meldelisten ermöglicht wird.

Die Formulierung "Meldeliste" kann im Sinne dieser Erfindung auch eine Klasse von Meldungen umfassen.

In der als Reaktion auf den Anmeldeauftrag 22 von der ersten SPS SPS1 10 an das erste Meldegerät MGA 11 gesandten Anmeldequittung 23 wird eine Sende-ID (z. B. S_ID-SPS1; vgl. FIG 7) übergeben, welche die gleiche funktionale Bedeutung hat, wie die Empfangs-ID im Anmeldeauftrag 22. Der Empfänger einer Meldung ME1, z. B. das erste Meldegerät 11, kann damit den Sender der Meldung, z. B. die erste SPS SPS1 10, eindeutig identifizieren. Ferner wird in der Anmeldequittung 23 auch der Meldeindex (z. B. E_IX-MGA; vgl. FIG 7) mit übergeben.

Diese Informationen sowie ein Speicherplatz für den Meldungszähler 24, der für jede Anmeldung angelegt und mit "0" initialisiert wird, speichert der Sender des Anmeldeauftrages 22, also z. B. das erste Meldegerät MGA 11, nach Erhalt der Anmeldequittung 23 in einer Empfangs-Meldeliste 26. In FIG 7 ist mit der Bezugsziffer 26' die Empfangs-Meldeliste vor dem Eingang der Anmeldequittung 23 bezeichnet. Nach dem Eingang der Anmeldequittung 23 umfasst die Empfangs-Meldeliste 24 zusätzlich auch einen Eintrag mit den mit der Anmeldequittung 23 übermittelten Daten, nämlich der Sende-ID "S_ID-SPS1" und dem Meldeindex "E_IX-MGA", sowie einen Speicherplatz für den mit "0" initialisierten Meldungszähler 24 "MZLR". Damit ist die Anmeldung zum Empfang von Meldungen quittiert. In FIG 6 ist dabei - analog zur Darstellung in FIG 2 - mit AM die Aktion zur Anmeldung zum Empfang von Meldungen, z. B. der Meldung ME1 über das Ereignis E1, und mit QA der Empfang der Quittung zur vorgenannten Anmeldung bezeichnet.

Im Folgenden wird das erfindungsgemäße Meldeverfahren anhand der Darstellungen in FIG 8 und FIG 9 erläutert. Dazu wird im Rahmen der exemplarisch behandelten Situation vorausgesetzt, dass sich die Meldegeräte MGA, MGB, MGC 11-13 über die L4-Kommunikationsverbindungen 15 für das Melden von Ereignissen, wie z. B. ein Ereignis E1, angemeldet haben (vgl. FIG 6, FIG 7) .

Bei Eintreten eines Ereignisses, z. B. des Ereignisses E1, wird dieses durch den Meldebaustein 16 erfasst und an die Meldeapplikation 17 (siebente Ebene L7) weitergeleitet. Die Meldeapplikation 17 der SPS 10 übergibt an die zweite Ebene L2 einerseits die Meldung ME1 und andererseits die Meldeliste 20, in der die angemeldeten Teilnehmer, hier die Meldegeräte MGA, MGB, MGC 11-13, hinterlegt sind, sowie Daten, die für den Meldevorgang notwendig sind. In der zweiten Ebene L2 werden diese Informationen z. B. von einem Ethernet Device Driver (EDD) verarbeitet. Bei einem solchen EDD handelt es sich um eine LSA-Komponente, in welche die zur Verarbeitung der Informationen und zur Abwicklung der zugehörigen Kommunikationsaufgaben notwendige Meldefunktionalität integriert ist.

Bei der Übergabe der o.g. Informationen an die zweite Ebene L2 wird der Meldungszähler 24 (z. B. MZLR; vgl. FIG 7) inkrementiert, wobei dieser Zähler 24 bei einem Überschlag nicht den Wert "0" annimmt. Die Anzahl der zu erwartenden Meldequittungen QE1 wird im Meldequittierzähler 25 gespeichert, z. B. "MQZLR=3".

Aus der zweiten Ebene L2 wird nun einmalig per Broad- oder Multicast (Mehrfachpfeil 30) ein Meldetelegramm 31 (vgl. auch FIG 9) versandt, das
- die Sende-ID (z. B. S_ID-SPS1),
- den Meldungszähler 24 und
- die eigentliche Meldung ME1 über das Ereignis E1 umfasst, wobei die Meldung ME1 genauso aufgebaut sein kann, wie die bisherigen, bekannten Meldungen ME1. Mit dem Versenden des Telegramms wird eine Zeitüberwachung gestartet.

Empfängt ein Meldegerät 11-13 in der zweiten Ebene L2 ein Telegramm, wird dies vom Telegrammaufbau her als Ebene-2-Telegramm erkannt und in der zweiten Ebene L2 bearbeitet, z. B. durch einen EDD (Ethernet Device Driver), eine LSA-Komponente, in die die notwendige Funktionalität integriert werden kann. Kann dem Telegramm keine implementierte Meldefunktionalität zugeordnet werden (das Meldegerät 11-13 kennt diese Meldefunktion nicht), wird das Telegramm verworfen. Dies gilt auch für den Empfang einer Meldequittung, wie weiter unten beschrieben wird.

Der Empfänger einer Meldung, z. B. das erste Meldegerät MGA 11, überprüft in der zweiten Ebene L2, ob er sich für Meldungen mit der gemeldeten Sende-ID (z. B. "S_ID-SPS1") angemeldet hat; ist dies nicht der Fall, ignoriert er die Meldung. Hat sich der Empfänger für die Meldungen des Senders angemeldet, wird der mit dem Meldetelegramm 31 empfangene Meldungszähler 24 mit dem in der Empfangs-Meldeliste 26 unter der mit dem Meldetelegramm 31 ebenfalls empfangenen Sende-ID gespeicherten Meldungszähler 24 verglichen.

Dabei können vier unterschiedliche Situationen eintreten:

Ist der in der Empfangs-Meldeliste 26 gespeicherte Meldungszähler 24 gleich Null ("= 0"), wird die empfangene Meldung ME1 akzeptiert, da es sich um die erste Meldung ME1 nach dem Anmelden handelt.

Ist der in der Empfangs-Meldeliste 26 gespeicherte Meldungszähler 24 nach einer Inkrementierung um "1" identisch mit dem mit dem Meldetelegramm 31 empfangenen Meldungszähler 24, wird die empfangene Meldung ME1 akzeptiert, wobei für die Inkrementierung des gespeicherten Meldungszählers 24 das gleiche Verfahren wie beim Senden der Meldung angewandt wird, d. h., bei einem Überschlag des Meldungszählers 24 nimmt dieser nicht den Wert "0" an.

Ist der in der Empfangs-Meldeliste 26 gespeicherte Meldungszähler 24 nach einer Inkrementierung um "1" (Inkrementierung wie oben) kleiner (unter Berücksichtigung eines möglichen Zählerumschlages) als der mit dem Meldetelegramm 31 empfangene Meldungszähler 24, ist eine vorangegangene Meldung verloren gegangen. Der Empfänger akzeptiert die empfangene Meldung ME1. Dies ist möglich, da der Sender der Meldung den Meldeverlust bereits festgestellt hat und zur Herstellung der gleichen Meldesicht eine Update-Anforderung eingeleitet hat, wie dies weiter unten beschrieben wird.

Ist der in der Empfangs-Meldeliste 26 gespeicherte Meldungszähler 24 identisch mit dem mit dem Meldetelegramm 31 empfangenen Meldungszähler 24, wird die empfangene Meldung ME1 nicht an die Anzeigenapplikation 21 weitergegeben, da es sich um eine bereits empfangene Meldung handelt. Diese Meldung ME1 wird jedoch mit der Meldequittung QE1 quittiert. Damit wird der Fall abgedeckt, dass z. B. die Meldequittung vom Sender der Meldung nicht empfangen wurde und der Meldevorgang vom Sender der Meldung wiederholt wurde.

Eine akzeptierte Meldung ME1 bewirkt, dass:
- der mit dem Meldetelegramm 31 empfangene Meldungszähler 24 gespeichert wird und
- als Meldequittung QE1 ein Quittungstelegramm 32 mit der Sende-ID (z. B. "S_ID-MGA"), dem in der Empfangs-Meldeliste 26 gespeicherten Meldeindex, z. B. "E_IX-MGA", und dem dort ebenfalls gespeicherten Meldungszähler 24 MZLR
an den Sender der Meldung ME1, also die erste SPS SPS1 10, gesendet wird.

Das Senden der Meldequittung QE1 kann unter folgenden Adressierungsarten erfolgen:
- Broadcast: jeder Netzteilnehmer erhält die Meldequittung QE1;
- Multicast: nur ausgewählte Netzteilnehmer erhalten die Meldequittung QE1;
- "adressierter Teilnehmer": die in der Anmeldung ausgetauschten oder aus der für die Anmeldung benutzten Verbindung gewonnenen Informationen reichen aus, um den Sender der Meldung für die Meldequittung QE1 als Ebene-2-Telegramm zu adressieren. In diesem Fall wird nur der Sender der Meldung, der die zugehörige Meldequittung erhält, belastet.

Zum Empfangen einer Meldequittung QE1 überprüft der jeweilige Empfänger einer solchen Quittung QE1, also z. B. die erste SPS SPS1 10, in der zweiten Ebene L2, ob der Sender der Meldequittung QE1 mit seiner Empfangs-ID in der Meldeliste 20 registriert ist, indem die durch den jeweiligen Meldeindex, z. B. "E_IX-MGA", vorgegebene Position der Meldeliste 20 im Hinblick auf die Empfangs-ID überprüft wird. Verläuft diese Überprüfung negativ, wird das Telegramm verworfen.

Das Telegramm wird ebenfalls verworfen, wenn der empfangene Meldungszähler 24 MZLR nicht mit dem in der Meldeliste 20 gespeicherten Meldungszähler 24 MZLR übereinstimmt. Es kann sich dann nämlich bei dem empfangenen Telegramm um eine zu stark verzögerte Quittung handeln. Der zugehörige Meldevorgang wurde zuvor bereits beendet.

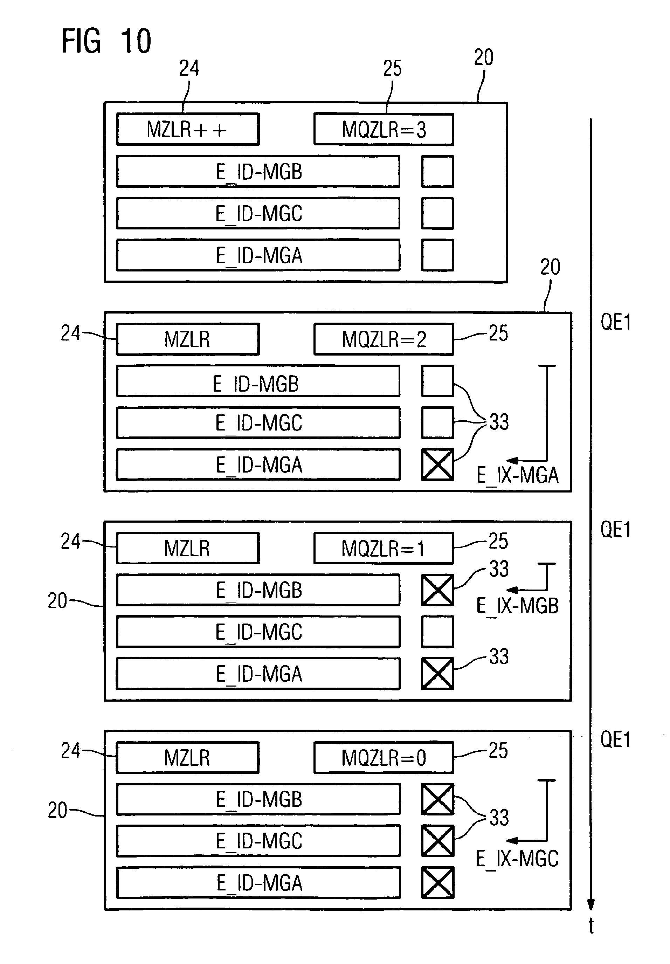

Wird in der Meldeliste 20 unter der durch den Wert des empfangenen Meldungszählers MZLR 24 (z. B. in FIG 10 beim Empfang der ersten Quittung QE1 "E_IX-MGA") die ebenfalls übermittelte Empfangs-ID (z. B. "E_ID-MGA") gefunden, wird dieses Ereignis in einem Meldequittiermerker 33, bezogen auf den Meldeindex (z. B. "E_IX-MGA"), gemerkt (in FIG 10 durch das "X" dargestellt) und der Meldequittierzähler 25 MQZLR dekrementiert.

Der Meldequittierzähler 25 wird nicht dekrementiert, wenn der Meldequittiermerker 33 bereits gesetzt war. Damit werden mögliche Wiederholungen der Meldequittungen QE1 erkannt.

Erreicht der Meldequittierzähler 25 den Wert Null, sind alle Meldequittungen QE1 eingetroffen. Aus der zweiten Ebene L2 wird daher das Ende des Meldevorganges signalisiert. Dies erfolgt z. B. mit einer Quittung Q, die zunächst an die Meldeapplikation 17 und von dort zum Meldebaustein 16 gelangt (vgl. FIG 8).

Beim Versenden der Meldung ME1 über das Ereignis E1 wird ein auf eine vorgegebene Überwachungszeit gesetzter Timer gestartet und dessen Ablauf überwacht (Time-Out). Nach Ablauf dieses Timers, also nach Verstreichen der Überwachungszeit, können oder müssen einzelne Meldungen ME1 wiederholt werden, weil u.a.
- beim Empfänger der Meldung ME1 oder der Meldequittung QE1 temporär keine Ressourcen zur Verfügung stehen und das jeweilige Telegramm daher nicht empfangen wurde oder
- temporäre Störungen im Netz existieren, die zum Telegrammverlust geführt haben.

Diese temporären Störungen werden überwunden, indem nach Ablauf der Überwachungszeit das Versenden der betroffenen Meldung ME1 jeweils n-mal wiederholt wird. Solche Störungen können sehr stark durch die Anlagen- und/oder Netzbedingungen geprägt sein. Deshalb ist es vorteilhaft, wenn wesentliche Parameter vorgebbar und veränderlich sind. Hierzu muss das System eine Übersicht bzgl. der Wiederholungen und fehlgeschlagenen Meldungen (Meldung wurde nach einer max. Anzahl von Wiederholungen nicht quittiert), bezogen auf die entfernten Kommunikationsteilnehmer, führen. Damit ist eine rückgekoppelte Nachjustierung möglich. Es ist auch eine algorithmische Nachjustierung durch den Sender der Meldung denkbar.

Konnte nach "n" Wiederholungen von einem oder mehreren Kommunikationsteilnehmern keine Meldequittung QE1 empfangen werden, reagiert die der siebenten Ebene L7 zugehörige Meldeapplikation 17 auf das Fehlen der Quittung QE1. An den- oder diejenigen Teilnehmer, die keine Meldequittung QE1 gesendet haben, sendet die Meldeapplikation 17 eine Update-Anforderung für das nicht empfangene Ereignis, z. B. das Ereignis E1. Eine solche Update-Anforderung ist an sich bekannt und stellt die gleiche Meldesicht aller angemeldeten Meldegeräte, also z. B. der Meldegeräte MGA, MGB, MGC 11-13, wieder her.

Bei einem evtl. Abbruch der Anmeldeverbindung oder nach dem Abmelden eines Kommunikationsteilnehmers wird der jeweilige Teilnehmer, also z. B. das jeweilige Meldegerät, aus der Meldeliste 20 gelöscht. Dieser Vorgang erfolgt in der siebenten Ebene L7. Koordiniert mit der zweiten Ebene L2, z. B. mittels Semaphorentechnik, kann das Löschen des jeweiligen Teilnehmers auch während des Meldevorganges erfolgen, um Wiederholvorgänge oder Wartezeiten abzukürzen. Dabei ist aber die Abhängigkeit von Meldequittiermerker 33 und Meldequittierzähler 25 zu berücksichtigen.

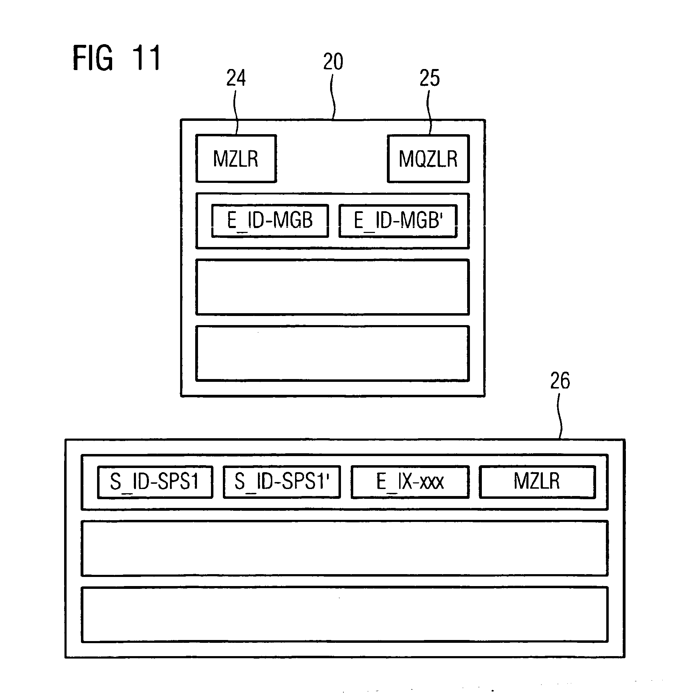

Nachfolgend wird eine besondere Situation erläutert, bei der eine hochverfügbare SPS, bestehend aus einer ersten SPS SPS1 10 und einer zweiten SPS SPS1', an ein ebenfalls hochverfügbar ausgeführtes Meldegerät (MGA, MGA') meldet. Diese Situation wird mit einer speziellen Ausgestaltung der Erfindung erfasst. Danach ist vorgesehen, dass sowohl die Meldeliste 20 als auch die Empfangs-Meldeliste 26 erweitert wird. Diese Erweiterung ist in FIG 11 dargestellt. Zum Vergleich wird auf FIG 7 verwiesen, in der die nicht erweiterten Listen 20, 26 dargestellt sind. Mit dieser Erweiterung kann eine Meldung ME1 oder eine Meldequittung QE1 eindeutig einem hochverfügbaren SPS-System, also der ersten SPS SPS1 oder der zweiten SPS SPS1' 10, 10' einerseits oder dem hochverfügbaren Meldegerät MGA, MGA' 11, 11' zugeordnet werden.

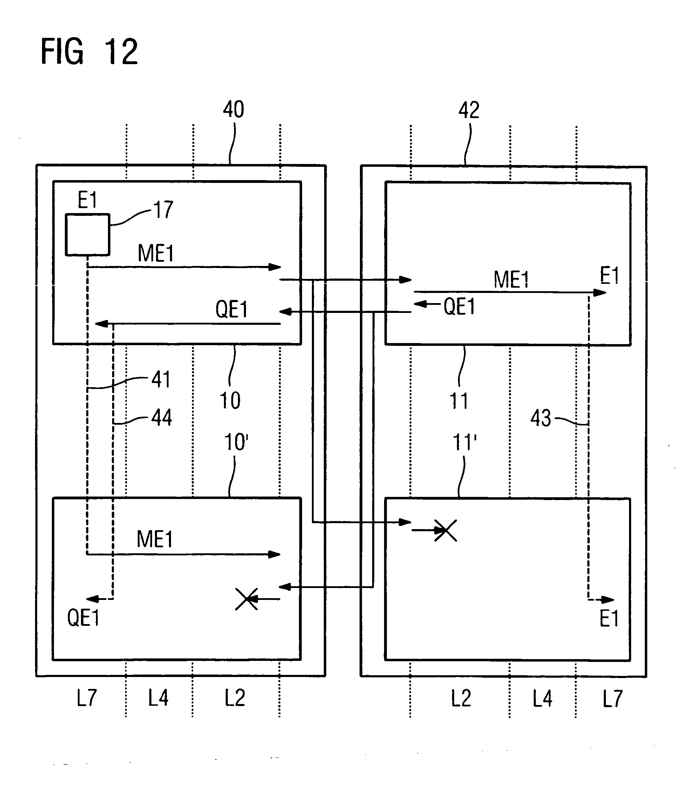

Weitere Einzelheiten werden anhand von FIG 12 beschrieben. Soll in einer hochverfügbaren Steuerung 40 mit einer ersten, als Master fungierenden Steuerung SPS1 10 und einer zweiten, als Reserve fungierenden Steuerung SPS1' 10' ein Ereignis E1 gemeldet werden, wird wie bisher dieses Ereignis E1 synchron in der der siebenten Ebene L7 zugehörigen Meldeapplikation 17 erfasst und aufgrund einer ersten Synchronisation 41 synchronisiert an die zweite Ebene L2 gemeldet. Aus der zweiten Ebene L2 sendet nur der Master 10, also z. B. die erste SPS SPS1 10, das Meldetelegramm ME1 als Broad- oder Multicast-Telegramm.

Dieses Telegramm wird von einem hochverfügbaren Meldesystem 42 mit einem ersten, als Master fungierenden Meldegerät MGA 11 und einem zweiten, als Reserve fungierenden Meldegerät MGA' 11' empfangen. Die Einzelgeräte 11, 11' des hochverfügbaren Meldesystems 42 erhalten jeweils diese Meldung ME1 als einkanaliges Ereignis aus der zweiten Ebene L2. Das Reserve-Meldegerät MGA' 11' ignoriert den Empfang der Meldung ME1 zum einen aufgrund des Reserve-Status und zum anderen aufgrund des Ursprungs der Meldung von einer hochverfügbaren Steuerung 40. Aufgrund einer zweiten Synchronisation 43 wird die Meldung ME1 innerhalb des hochverfügbaren Meldesystems 42 auch an die siebente Ebene L7 des Reserve-Meldegerätes MGA' 11' weitergereicht.

Lediglich der Master 11 des hochverfügbaren Meldesystems 42 sendet an die oder jede Komponente 10, 10' der hochverfügbaren Steuerung 40 die Meldequittung QE1. Beim Empfang der Meldequittung QE1 kann analog vorgegangen werden, d. h., die Meldequittung QE1 wird als Broad- oder Multicast-Telegramm versandt und die Reserve-SPS 11' ignoriert diese Quittung QE1. Das Ereignis der Meldequittung wird vom Master 10 als einkanaliges Ereignis der zweiten Ebene L2 mit einer dritten Synchronisation 44 synchronisiert und an die jeweilige Meldeapplikation beider Steuerungen 10, 10' weitergemeldet.

Zur Synchronisation, wie oben beschrieben, speziell für die zweite und dritte Synchronisation 43, 44 kommt die Anwendung so genannter, in einem hochverfügbaren Betriebssystem an sich bekannter Zwittertasks in Betracht. Eine solche Task ist in der Lage, einseitig (einkanalig) in einer Systemkomponente des hochverfügbaren Systems zum Ablauf zu kommen, um ein (einkanaliges) Ereignis zu bearbeiten, das in dieser Komponente aufgetreten ist. Solche einkanalige Ereignisse kann diese Task mit der korrespondierenden Zwittertask so synchronisieren, dass dieses einkanalige Ereignis synchron (zweikanalig) von dem hochverfügbaren System weiterbearbeitet werden kann. Tritt ein und dasselbe Ereignis in beiden Tasks gleichzeitig auf, sind die Zwittertasks so aufeinander abgestimmt, dass nur ein Ereignis synchron weiterbearbeitet wird. Es kommt also nicht zur Verdopplung der Ereignisse.

Hinsichtlich der Wiederholstrategie kann die Überwachungszeit von Master und Reserve so aufeinander abgestimmt werden, dass die Reserve erst nach "n" Wiederholungen des Masters beginnt, parallel Meldetelegramme zu wiederholen. In dieser Situation reagiert die Reserve auf die Meldequittungen wie der Master; Meldequittungen werden bearbeitet und nicht verworfen. Mehrfach auftretende Meldungen und Quittungen werden wie bei nicht hochverfügbaren Systemen behandelt.

Damit auch Standard-Steuerungen, also nicht hochverfügbar ausgeführte Steuerungen, Meldungen mit hochverfügbar ausgeführten Anzeigegeräten austauschen können (2 zu 1 Beziehung), ist gemäß der Erfindung vorgesehen, dass die Meldeliste 20 und die Empfangsmeldeliste 26 der Standardgeräte wie bei den hochverfügbaren Geräten ausgelegt wird (vgl. FIG 11). Die Speicherstelle für die "zweite Komponente" ist beim Meldeaustausch mit Standardgeräten als nicht gültig gekennzeichnet.

Eine Synchronisation zwischen den beiden Steuerungen SPS1, SPS1' 10, 10' in einem hochverfügbaren System ist lediglich vor dem Versenden der Meldung ME1 und nach dem Empfang aller Quittungen QE1 notwendig.

Insgesamt ergeben sich mit der Erfindung folgende Vorteile:

Durch das beschriebene Verfahren wird die SPS beim Versenden von Meldungen deutlich entlastet. Die Reaktion erfolgt in Interrupt-Service-Routinen, so dass eine sehr schnelle Reaktionszeit möglich ist und damit die Anzahl der Taskwechsel erheblich abgesenkt werden kann. Dies gilt besonders für die hochverfügbaren Steuerungen, da dort die Anzahl der Synchronisationen von einem Vielfachen der angemeldeten Meldeteilnehmer auf zwei Synchronisationen reduziert werden kann.

Dies bedeutet letztendlich für den Anwender einer solchen Steuerung eine deutlich erhöhte Meldesequenz und geringere Rückwirkungen auf andere Kommunikationsdienste.

Ein weiterer Vorteil besteht darin, dass eine hochverfügbare SPS an ein nicht hochverfügbares Meldegerät melden (2 zu 1 Beziehung) kann.

Damit lässt sich die Erfindung kurz wie folgt darstellen: Es wird ein Verfahren zum Senden und Empfangen von Ereignismeldungen angegeben, bei dem die Ereignismeldungen ME1 aus einer besonderen Schicht eines sieben Schichten umfassenden Kommunikationsstacks heraus als Broad- oder Multicast-Telegramm versandt werden und bei dem der Sender solcher Ereignismeldungen Informationen verwaltet, die ihn in die Lage versetzen, genau festzustellen, ob von jedem vorgesehenen Empfänger einer solchen Ereignismeldung als Reaktion auf den Empfang der Ereignismeldung eine entsprechende Meldequittung QE1 eingeht, so dass ein Meldevorgang nur dann abgeschlossen wird, wenn alle erforderlichen Quittungen vorliegen und damit sichergestellt ist, dass der Versand und der Empfang der Ereignismeldung ordnungsgemäß und fehlerfrei erfolgt ist.

## Patentansprüche

1. Verfahren zum Übermitteln von Meldungen über ein von einem ersten Kommunikationsteilnehmer (10) registriertes Ereignis (E1) - Ereignismeldung (ME1) - an mindestens einen entfernten Kommunikationsteilnehmer (11, 12, 13),
**dadurch gekennzeichnet,**
**dass** die Ereignismeldung (ME1) in Form eines Broad- oder Multicast-Telegramms, das zumindest die Ereignismeldung (ME1) umfasst, aus einer zweiten Ebene (LE2) eines sieben Ebenen umfassenden Kommunikationsstacks versandt wird und
**dass** eine dem ersten Kommunikationsteilnehmer (10) zugeordnete Meldeliste (20), in die jeder entfernte Kommunikationsteilnehmer (11, 12, 13) zum Empfang einer Ereignismeldung (ME1) eingetragen wird, Informationen über eine Anzahl von Quittungen (QE1), die als Reaktion auf den Versand der jeweiligen Ereignismeldung (ME1) von dem oder jedem entfernten Kommunikationsteilnehmer (11, 12, 13) erwartet werden,
umfasst,
wobei aus der zweiten Ebene (LE2) das Ende des Meldevorgangs signalisiert wird, wenn sämtliche erwarteten Quittungen (QE1) eingetroffen sind.

2. Verfahren nach Anspruch 1,
wobei als Reaktion auf die Ereignismeldung (ME1) von einem Empfänger der Ereignismeldung (ME1) eine Quittung (QE1) in Form eines Broad- oder Multicast-Telegramms versandt wird.

3. Verfahren nach Anspruch 1 oder 2,
wobei die Quittung (QE1) in Form eines Broad- oder Multicast-Telegramms aus einer zweiten Ebene (LE2) eines sieben Ebenen umfassenden Kommunikationsstacks versandt wird.

4. Verfahren nach einem der vorangehenden Ansprüche,
wobei der erste Kommunikationsteilnehmer (10) den Versand der Ereignismeldung (ME1) dann und nur dann als erfolgreich quittiert (Q), wenn sämtliche aufgrund der Informationen der Meldeliste (20) erwarteten Quittungen (QE1) eingetroffen sind.

5. Verfahren nach Anspruch 4,
wobei mit dem Versenden der Ereignismeldung (ME1) eine Zeitüberwachung gestartet wird und wobei der erste Kommunikationsteilnehmer (10) den Versand der Ereignismeldung (ME1) dann und nur dann als erfolgreich quittiert (Q), wenn sämtliche aufgrund der Informationen der Meldeliste (20) erwarteten Quittungen (QE1) innerhalb einer durch die Zeitüberwachung vorgegebenen Zeitspanne eingetroffen sind.

6. Verfahren nach einem der Ansprüche 4 oder 5,
wobei der erste Kommunikationsteilnehmer (10) beim Versenden der Ereignismeldung (ME1) einen der Meldeliste (20) zugeordneten Meldequittierzähler (25) mit der Anzahl der in der Meldeliste (20) zum Empfang der Ereignismeldung (ME1) eingetragenen entfernten Kommunikationsteilnehmer (11-13) initialisiert.

7. Verfahren nach Anspruch 6,
wobei der erste Kommunikationsteilnehmer (10) bei Empfang einer Quittung (QE1) von einem entfernten Kommunikationsteilnehmer (11-13), der nach dem Inhalt der Meldeliste (20) für einen Empfang der Ereignismeldung (ME1) vorgesehen war, den Meldequittierzähler (25) dekrementiert.

8. Verfahren nach Anspruch 7,
wobei die Meldeliste (20) für jeden zum Empfang der Ereignismeldung (ME1) angemeldeten entfernten Kommunikationsteilnehmer (11-13) einen Meldequittiermerker (33) umfasst und
wobei der Empfang einer Quittung (QE1) von einem entfernten Kommunikationsteilnehmer (11-13) im jeweils zugehörigen Meldequittiermerker (33) gespeichert wird und wobei der Meldequittierzähler (25) dann und nur dann dekrementiert wird, wenn in dem zugehörigen Meldequittiermerker (33) nicht bereits ein Empfang einer vorangehenden Quittung (QE1) gespeichert ist.

9. Verfahren nach einem der vorangehenden Ansprüche,
wobei eine dem oder jedem entfernten Kommunikationsteilnehmer (11-13) zugeordnete Empfangs-Meldeliste (26) zur Aufnahme eines mit der Ereignismeldung (ME1) empfangenen Meldungszählers (24) vorgesehen ist und wobei der Wert des Meldungszählers (24) der empfangenen Ereignismeldung (ME1) und der in der Empfangs-Meldeliste (26) vorhandene Wert des Meldungszählers (24) vor Verarbeitung der Ereignismeldung (ME1) verglichen wird.

10. Verfahren nach Anspruch 9,
wobei die empfangene Ereignismeldung (ME1) durch den entfernten Kommunikationsteilnehmer (11-13) nicht verarbeitet wird, wenn der empfangene und der gespeicherte Meldungszähler (24) übereinstimmen.

11. Verfahren nach Anspruch 9 oder 10,
wobei die empfangene Ereignismeldung (ME1) vom entfernten Kommunikationsteilnehmer (11-13) akzeptiert und insbesondere an eine dem jeweiligen Kommunikationsteilnehmer (11-13) zugeordnete Anzeigeapplikation (21) weitergeleitet wird, wenn
- der in der Empfangs-Meldeliste (26) gespeicherte Meldungszähler (24) gleich Null ist oder
- der in der Empfangs-Meldeliste (26) gespeicherte und um Eins inkrementierte Meldungszähler (24) identisch mit dem empfangenen Meldungszähler (24) ist oder
- der in der Empfangs-Meldeliste (26) gespeicherte und um Eins inkrementierte Meldungszähler (24) kleiner als der empfangene Meldungszähler (24) ist.

12. Verfahren nach Anspruch 11,
wobei der empfangene Meldungszähler (24) in der Empfangs-Meldeliste (26) des jeweiligen entfernten Kommunikationsteilnehmers (11-13) gespeichert wird, wenn dieser die empfangene Ereignismeldung (ME1) akzeptiert hat.

13. Verfahren nach Anspruch 11 oder 12,
wobei der oder jeder entfernte Kommunikationsteilnehmer (11-13) eine Quittung (QE1) als Reaktion auf eine empfangene Ereignismeldung (ME1) dann sendet, wenn dieser die Ereignismeldung (ME1) anhand der Auswertung von empfangenem und gespeichertem Meldungszähler (24) akzeptiert hat.

14. Verfahren nach einem der vorangehenden Ansprüche,
wobei bei einem hochverfügbaren System mit einem zumindest doppelt ausgeführten ersten Kommunikationsteilnehmer (10, 10') zumindest einem ebenfalls zumindest doppelt ausgeführten entfernten Kommunikationsteilnehmer (11, 11'; 12, 12'; 13, 13') die Meldeliste (20) für jeden angemeldeten entfernten Kommunikationsteilnehmer (11, 12, 13) zusätzlich Informationen im Hinblick auf das redundante Gegenstück (11', 12', 13') des jeweiligen Kommunikationsteilnehmers (11-13) umfasst.

15. Verfahren nach Anspruch 14,
wobei der Versand der Ereignismeldung (ME1) dann und nur dann als erfolgreich quittiert (Q) wird, wenn sämtliche aufgrund der Informationen der Meldeliste (20) erwarteten Quittungen (QE1) von sämtlichen entfernten Kommunikationsteilnehmern (11-13') eingetroffen sind.

## Claims

1. Method of transmitting reports about an event (E1) which is registered by a first communication station (10) - event report (ME1) - to at least one remote communication station (11, 12, 13), **characterized in that**
the event report (ME1) is sent in the form of a broadcast or multicast message, which includes at least the event report (ME1), from a second level (LE2) of a communication stack comprising seven levels, and that
a reporting list (20) which is assigned to the first communication station (10), and into which every remote communication station (11, 12, 13) to receive an event report (ME1) is entered, includes information about a number of acknowledgments (QE1) which are expected as reaction to the sending of the relevant event report (ME1) from the or every remote communication station (11, 12, 13),
the end of the reporting process being signalled from the second level (LE2) if all expected acknowledgments (QE1) have arrived.

2. Method according to Claim 1,
wherein as reaction to the event report (ME1), an acknowledgment (QE1) in the form of a broadcast or multicast message is sent by a recipient of the event report (ME1).

3. Method according to Claim 1 or 2,
wherein the acknowledgment (QE1) is sent in the form of a broadcast or multicast message from a second level (LE2) of a communication stack comprising seven levels.

4. Method according to one of the preceding claims,
wherein the first communication station (10) acknowledges (Q) the sending of the event report (ME1) as successful if and only if all the acknowledgments (QE1) which are expected on the basis of the information of the reporting list (20) have arrived.

5. Method according to Claim 4,
wherein when the event report (ME1) is sent, a timeout is started, and the first communication station (10) acknowledges (Q) the sending of the event report (ME1) as successful if and only if all acknowledgments (QE1) which are expected on the basis of the information of the reporting list (20) have arrived within a time span which is predetermined by the timeout.

6. Method according to one of Claims 4 or 5,
wherein the first communication station (10), when it sends the event report (ME1), initialises a report acknowledgment counter (25), which is assigned to the reporting list (20), with the number of remote communication stations (11-13) which are entered in the reporting list (20) for receiving the event report (ME1).

7. Method according to Claim 6,
wherein on receiving an acknowledgment (QE1) from a remote communication station (11-13), which according to the content of the reporting list (20) was intended to receive the event report (ME1), the first communication station (10) decrements the report acknowledgment counter (25).

8. Method according to Claim 7,
wherein the reporting list (20) includes a report acknowledgment marker (33) for each remote communication station (11-13) which is logged in for receiving the event report (ME1), and the reception of an acknowledgment (QE1) from a remote communication station (11-13) is stored in the appropriate report acknowledgment marker (33), and wherein the report acknowledgment counter (25) is decremented if and only if a reception of a previous acknowledgment (QE1) has not already been stored in the appropriate report acknowledgment marker (33).

9. Method according to one of the preceding claims,
wherein a reception reporting list (26) which is assigned to the or every remote communication station (11-13) is provided to take a report counter (24) which is received with the event report (ME1), and wherein the value of the report counter (24) of the received event report (ME1) and the existing value of the report counter (24) in the reception reporting list (26) are compared before the event report (ME1) is processed.

10. Method according to Claim 9,
wherein the received event report (ME1) is not processed by the remote communication station (11-13) if the received and stored report counters (24) agree.

11. Method according to Claim 9 or 10,
wherein the received event report (ME1) is accepted by the remote communication station (11-13), and in particular is passed on to a display application (21) which is assigned to the relevant communication station (11-13), if
- the report counter (24) which is stored in the reception reporting list (26) equals zero, or
- the report counter (24) which is stored in the reception reporting list (26) and is incremented by one is identical to the received report counter (24), or
- the report counter (24) which is stored in the reception reporting list (26) and is incremented by one is less than the received report counter (24).

12. Method according to Claim 11,
wherein the received report counter (24) is stored in the reception reporting list (26) of the relevant remote communication station (11-13) if the latter has accepted the received event report (ME1).

13. Method according to Claim 11 or 12,
wherein the or every remote communication station (11-13) sends an acknowledgment (QE1) as reaction to a received event report (ME1) if the latter has accepted the event report (ME1) on the basis of evaluating the received and stored report counter (24).

14. Method according to one of the preceding claims,
wherein in the case of a highly available system with an at least duplicated first communication station (10, 10') and/or at least one also at least duplicated remote communication station (11, 11'; 12, 12'; 13, 13'), the reporting list (20) for each logged-in remote communication station (11, 12, 13) additionally contains information regarding the redundant counterpart (11', 12', 13') of the relevant communication station (11-13).

15. Method according to Claim 14,
wherein sending the event report (ME1) is acknowledged (Q) as successful when and only when all acknowledgments which are expected on the basis of the information of the reporting list (20) from all remote communication stations (11-13') have arrived.

## Revendications

1. Procédé de transmission de notifications concernant un événement (E1) - notification d'événement (ME1) -, enregistré par un premier abonné de communication (10), à au moins un abonné de communication distant (11, 12, 13),
**caractérisé par le fait que**
la notification d'événement (ME1) est émise sous la forme d'un télégramme de diffusion broadcast ou multicast comprenant au moins la notification d'événement (ME1) à partir d'un deuxième niveau (LE2) d'une pile de communication comprenant sept niveaux, et
une liste de notification (20) qui est associée au premier abonné de communication (10) et dans laquelle chaque abonné de communication distant (11, 12, 13) est enregistré pour la réception d'une notification d'événement (ME1) comprend des informations sur un nombre de confirmations (QE1) qui sont attendues du ou de chaque abonné de communication distant (11, 12, 13) en réaction à l'émission de la notification d'événement respective (ME1),
la fin de l'opération de notification étant signalée à partir du deuxième niveau (LE2) lorsque toutes les confirmations attendues (QE1) sont arrivées.

2. Procédé selon la revendication 1,
dans lequel, en réaction à la notification d'événement (ME1), une confirmation (QE1) est émise par un récepteur de la notification d'événement (ME1) sous la forme d'un télégramme de diffusion broadcast ou multicast.

3. Procédé selon la revendication 1 ou 2,
dans lequel la confirmation (QE1) est émise sous la forme d'un télégramme de diffusion broadcast ou multicast à partir d'un deuxième niveau (LE2) d'une pile de communication comprenant sept niveaux.

4. Procédé selon l'une des revendications précédentes,
dans lequel le premier abonné de communication (10) confirme (Q) comme réussie l'émission de la notification d'événement (ME1) si et seulement si toutes les confirmations (QE1) attendues conformément aux informations de la liste de notification (20) sont arrivées.

5. Procédé selon la revendication 4,
dans lequel, avec l'émission de la notification d'événement (ME1), on démarre une surveillance temporelle et dans lequel le premier abonné de communication (10) confirme (Q) comme réussie l'émission de la notification d'événement (ME1) si et seulement si toutes les confirmations (QE1) attendues conformément aux informations de la liste de notification (20) sont arrivées pendant un intervalle de temps prescrit par la surveillance temporelle.

6. Procédé selon l'une des revendications 4 ou 5,
dans lequel, lors de l'émission de la notification d'événement (ME1), le premier abonné de communication (10) initialise un compteur de confirmation de notification (25), associé à la liste de notification (20), avec le nombre des abonnés de communication distants (11 à 13) enregistrés dans la liste de notification (20) pour la réception de la notification d'événement (ME1).

7. Procédé selon la revendication 6,
dans lequel, lors de la réception d'une confirmation (QE1) d'un abonné de communication distant (11 à 13) qui était prévu conformément au contenu de la liste de notification (20) pour une réception de la notification d'événement (ME1), le premier abonné de communication (10) décrémente le compteur de confirmation de notification (25).

8. Procédé selon la revendication 7,
dans lequel la liste de notification (20) comprend pour chaque abonné de communication distant (11 à 13) enregistré pour la réception de la notification d'événement (ME1) un indicateur de confirmation de notification (33), dans lequel la réception d'une confirmation (QE1) d'un abonné de communication distant (11 à 13) est mémorisée dans l'indicateur de confirmation de notification (33) respectivement associé et dans lequel le compteur de confirmation de notification (25) est décrémenté si et seulement si une réception d'une confirmation précédente (QE1) n'est pas déjà mémorisée dans l'indicateur de confirmation de notification (33) associé.

9. Procédé selon l'une des revendications précédentes,
dans lequel une liste de notification de réception (26) associée à l'abonné ou à chaque abonné de communication distant (11 à 13) est prévue pour l'enregistrement d'un compteur de notification (24) reçu avec la notification d'événement (ME1) et dans lequel la valeur du compteur de notification (24) de la notification d'événement (ME1) reçue et la valeur du compteur de notification (24) présente dans la liste de notification de réception (26) sont comparées avant le traitement de la notification d'événement (ME1).

10. Procédé selon la revendication 9,
dans lequel la notification d'événement (ME1) reçue n'est pas traitée par l'abonné de communication distant (11 à 13) lorsque le compteur de notification (24) reçu et le compteur de notification mémorisé coïncident.

11. Procédé selon la revendication 9 ou 10,
dans lequel la notification d'événement (ME1) reçue est acceptée par l'abonné de communication distant (11 à 13) et est notamment retransmise à une application d'affichage (21) associée à l'abonné de communication respectif (11 à 13) lorsque
- le compteur de notification (24) mémorisé dans la liste de notification de réception (26) est nul, ou
- le compteur de notification (24) mémorisé dans la liste de notification de réception (26) et incrémenté de un est identique au compteur de notification (24) reçu, ou
- le compteur de notification (24) mémorisé dans la liste de notification de réception (26) et incrémenté de un est inférieur au compteur de notification (24) reçu.

12. Procédé selon la revendication 11,
dans lequel le compteur de notification (24) reçu est mémorisé dans la liste de notification de réception (26) de l'abonné de communication distant respectif (11 à 13) lorsque celui-ci a accepté la notification d'événement (ME1) reçue.

13. Procédé selon la revendication 11 ou 12,
dans lequel le ou chaque abonné de communication distant (11 à 13) émet une confirmation (QE1) en réaction à une notification d'événement (ME1) reçue lorsqu'il a accepté la notification d'événement (ME1) suite à l'évaluation des compteurs de notification (24) reçu et mémorisé.

14. Procédé selon l'une des revendications précédentes,
dans lequel, dans un système à haute disponibilité comprenant au moins un premier abonné de communication (10, 10') réalisé en deux exemplaires et au moins un abonné de communication distant (11, 11' ; 12, 12' ; 13, 13') également réalisé en deux exemplaires, la liste de notification (20) comprend en plus, pour chaque abonné de communication distant (11, 12, 13) enregistré, des informations sur l'exemplaire redondant (11', 12', 13') de l'abonné de communication respectif (11 à 13).

15. Procédé selon la revendication 14,
dans lequel l'émission de la notification d'événement (ME1) est confirmée (Q) comme réussie si et seulement si toutes les confirmations (QE1) attendues conformément aux informations de la liste de notification (20) sont arrivées de tous les abonnés de communication distants (11 à 13').
